# EUROPEAN PATENT APPLICATION

(11) **EP 3 958 524 A1**
(43) Date of publication of application: **23.02.2022**
(21) Application number: 21173628.5
(22) Date of filing: 12.05.2021
(51) Int. Cl.: H04L 12/751, H04L 12/715, H04L 12/721, H04L 12/717

(54) **UTILIZING FLEX-ALGORITHMS WITH ROUTE REFLECTION**

(30) Priority: 19.08.2020 IN 202041035726; 23.03.2021 US 202117210186
(71) Applicant: Juniper Networks, Inc., Sunnyvale, CA 94089 (US)
(72) Inventor: JOSEPH, William Britto Arimboor, Sunnyvale, CA 94089 (US); BHAT, Bharath RadhaKrishna, Sunnyvale, CA 94089 (US); HEGDE, Shraddha, Sunnyvale, CA 94089 (US)
(74) Representative: D Young & Co LLP

(57) **Abstract**

A route reflector (e.g., a flex-algorithm optimal route reflector (ORR)) may receive an advertisement communication from a network device of a network associated with the route reflector and may identify, in the advertisement communication, information identifying one or more flex-algorithms that are supported by the network device. The route reflector may determine, based on the information identifying the one or more flex-algorithms that are supported by the network device, a set of routing paths associated with a flex-algorithm of the one or more flex-algorithms. The route reflector may update a data structure to include routing path information that indicates the set of routing paths associated with the flex-algorithm and may transmit a routing communication that includes routing information associated with the routing path information to the network device.

## Description

### CROSS-REFERENCE TO RELATED APPLICATION

This application claims priority to India Provisional Application No. 202041035726 entitled "ROUTE REFLECTION FOR A FLEX-ALGORITHM NETWORK," filed on August 19, 2020. The entire content of which is expressly incorporated herein by reference.

### BACKGROUND

A network that conforms to the border gateway protocol (BGP) may utilize route reflection, which allows a network device to send route information to one or more network devices (e.g., BGP peers) without having to individually send the route information to each network device of the one or more network devices.

### SUMMARY

Particular embodiments are set out in the independent claims. Various optional examples are set out in the dependent claims. In some implementations, a route reflector includes one or more memories and one or more processors to: receive an advertisement communication from a network device of a network associated with the route reflector; identify, in the advertisement communication, information identifying one or more flex-algorithms that are supported by the network device; determine, based on the information identifying the one or more flex-algorithms that are supported by the network device, a set of routing paths associated with a flex-algorithm of the one or more flex-algorithms; update a data structure to include routing path information that indicates the set of routing paths associated with the flex-algorithm; and transmit a routing communication that includes routing information associated with the routing path information to the network device.

In some implementations, a computer-readable medium comprising a set of instructions includes one or more instructions that, when executed by one or more processors of a route reflector, cause the route reflector to: identify information identifying one or more flex-algorithms that are supported by a network device, determine, based on the information identifying the one or more flex-algorithms that are supported by the network device, a set of routing paths associated with a flex-algorithm of the one or more flex-algorithms; and send, to the network device, a routing communication that includes routing information that is based on the set of routing paths associated with the flex-algorithm.

In some implementations, a method includes identifying, by a network device of a network, one or more flex-algorithms that are supported by the network device; generating, by the network device, an advertisement communication that includes information identifying the one or more flex-algorithms that are supported by the network device; sending, by the network device, the advertisement communication to a route reflector of the network; receiving, by the network device and from the route reflector, a routing communication that includes routing information associated with the one or more flex-algorithms; and performing, by the network device and based on the routing information, one or more actions associated with routing traffic.

### BRIEF DESCRIPTION OF THE DRAWINGS

Figs. 1A-1F are diagrams of an example implementation described herein.
Fig. 2 is a diagram of an example environment in which systems and/or methods described herein may be implemented.
Fig. 3-4 are diagrams of example components of one or more devices of Fig. 2.
Figs. 5-6 are flowcharts of example processes relating to utilizing flex-algorithms with route reflection.

### DETAILED DESCRIPTION

The following detailed description of example implementations refers to the accompanying drawings. The same reference numbers in different drawings may identify the same or similar elements.

A network comprises network devices (e.g., routers and/or similar devices) that allow computing devices associated with the network to communicate data. The network devices may use a routing protocol, such as an interior gateway protocol (IGP), that allows the network devices to share information associated with the network devices and a topology of the network. Accordingly, each network device may maintain a data structure, such as a link state database (LSDB) or a traffic engineering database (TED), that includes the information associated with the network devices and the topology of the network. A network device may cause a data packet to be routed through the network based on information included in the data structure.

The network may comprise route reflectors that determine route paths for network devices that are associated with the route reflectors (e.g., client network devices of the route reflectors, such as provider edge (PE) network devices). In some cases, a route reflector utilizes optimal route reflection (ORR) to determine route paths for a network device associated with the route reflector. For example, the route reflector may use a traffic engineering solution, such as a utilizing a flex-algorithm to determine optimal route paths for the network device based on a particular characteristic associated with links of the network. When using ORR, the route reflector is determining the route paths using a single specific, preconfigured algorithm (e.g., a particular flex-algorithm, such an IGP best-path selection algorithm). However, this causes the network device to route all traffic destined for a particular destination using a same route path, which may cause some traffic to be routed in a way that violates one or more quality of service (QoS) requirements associated with the network (e.g., high-priority traffic may be routed with high latency) and therefore impacts a performance of the network. Further, this often wastes computing resources (e.g., processing resources, memory resources, communication resources, and/or power resources, among other examples) of one or more network devices of the network to route traffic according to a suboptimal route path.

Some implementations described herein provide a route reflector (e.g., a flex-algorithm optimal route reflector (ORR)) that may communicate with a network device (e.g., a PE device) in a network to identify one or more flex-algorithms that are supported by the network device. A flex-algorithm may be used to determine a route path for a packet from the network device to another network device and may be based on a link attribute of the network (e.g., that indicates metric information associated with links of the network, such as respective IGP metrics, latency metrics, and/or delay metrics, among other examples).

The route reflector may determine, based on the information identifying the one or more flex-algorithms that are supported by the network device, a set of routing paths associated with a flex-algorithm of the one or more flex-algorithms and may update a data structure (e.g., a routing table associated with the route reflector) to include routing path information that indicates the set of routing paths associated with the flex-algorithm. The route reflector may transmit a routing communication that includes routing information associated with the routing path information to the network device, and the network device may update, based on the routing information, a data structure (e.g., a routing table associated with the network device). The network device then may cause, based on information included the data structure, first packets (e.g., that are associated with a first flex-algorithm) to be routed to a first destination network device associated with a routing destination address and second packets (e.g., that are associated with a second flex-algorithm) to be routed to a second destination network device associated with the routing destination address.

In this way, some implementations described herein provide a network of network devices (e.g., PE network devices and route reflectors) that support multiple flex-algorithms for determining route paths, rather than just one default algorithm. Accordingly, a route reflector (e.g., a flex-algorithm ORR) can determine, using the multiple flex-algorithms, multiple route paths associated with a routing destination address and provide information regarding the multiple route paths to a network device. This allows the network device to cause sets of packets to be differently routed to the routing destination address (e.g., high-priority packets to be routed via a low-latency route path, low-priority packets to be routed via a shortest IGP route path, and/or other example route paths), which increases a likelihood that a set of packets is routed in a way that one or more QoS requirements associated with the network are satisfied and therefore provides a more reliable performance of the network. Further, this conserves computing resources (e.g., processing resources, memory resources, communication resources, and/or power resources, among other examples) of network devices that would otherwise be used to route packets on a suboptimal route path.

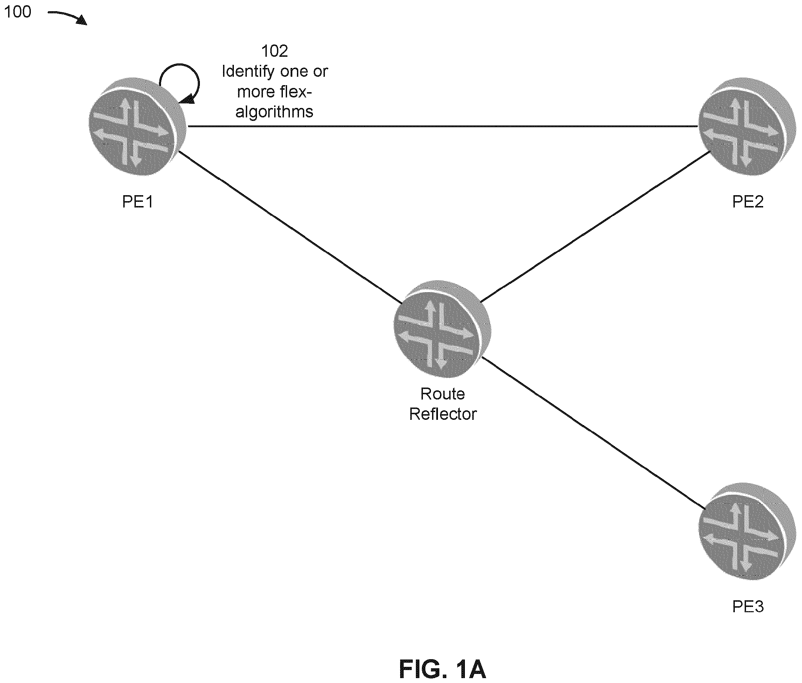

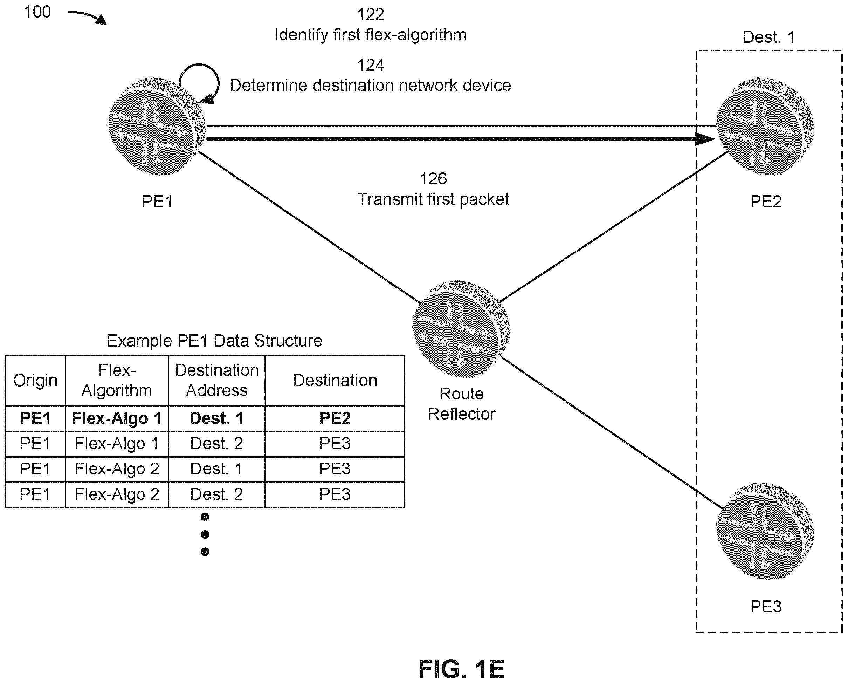

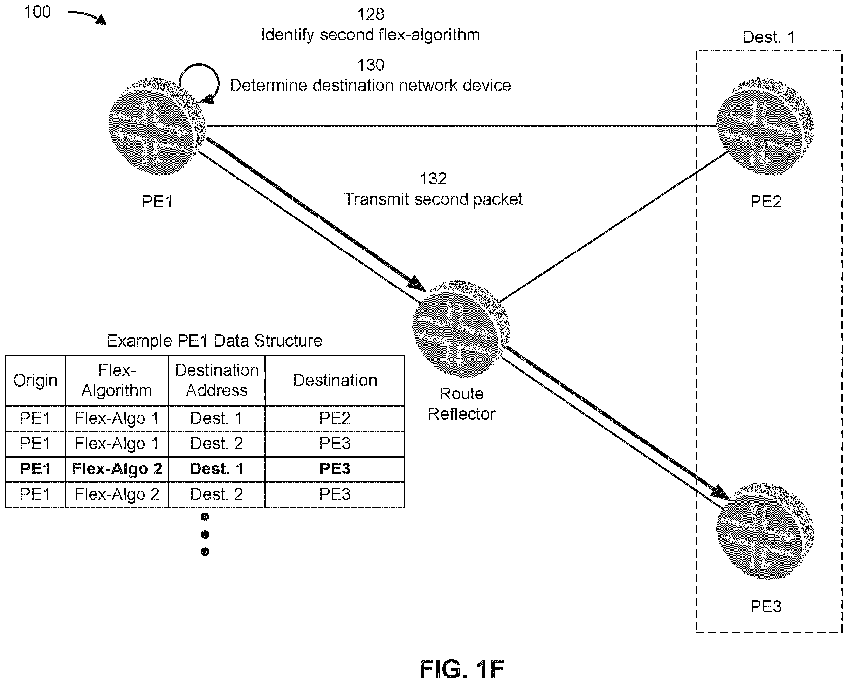

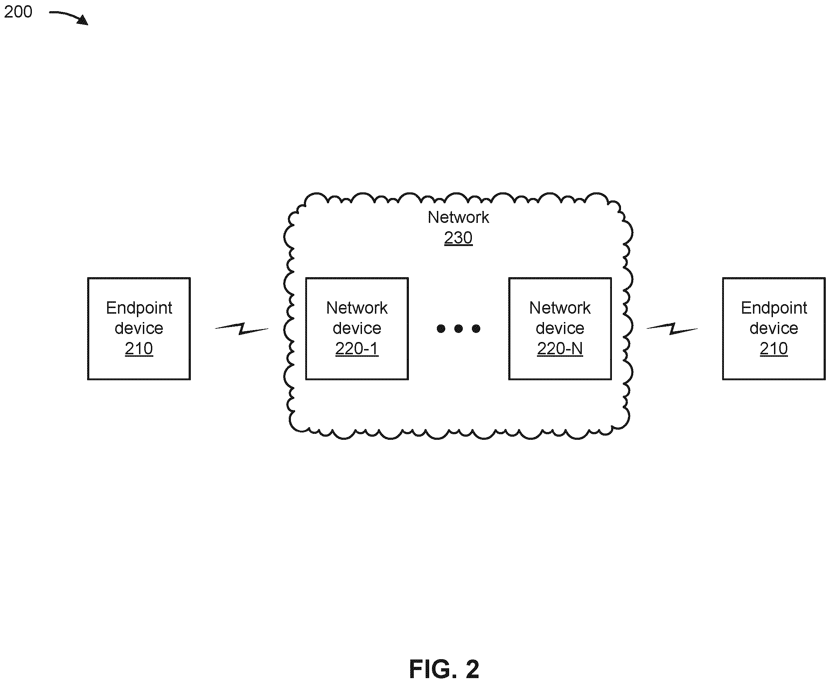

Figs. 1A-1F are diagrams of one or more example implementations 100 described herein. Example implementation(s) 100 may include multiple network devices, such as one or more route reflectors and/or one or more provider edge (PE) devices, which are described in more detail below in connection with Figs. 2-4. The multiple network devices may be included in a network that connects endpoint devices (not shown), such as a network that utilizes BGP route reflection.

As shown in Figs. 1A-1F, example implementation(s) 100 may include a route reflector (e.g., a flex-algorithm optimal route reflector (ORR)) that is connected by respective links to PE devices PE1 through PE3. As further shown in Figs. 1A-1F, a link may connect PE1 and PE2.

As shown in Fig. 1A, and by reference number 102, PE1 may identify one or more flex-algorithms that are supported by PE1. For example, PE1 may be configured (e.g., manually configured) to support the one or more flex-algorithms. As another example, PE1 may receive a configuration communication that identifies and/or defines the one or more flex-algorithms. PE1 may process the configuration communication to cause PE1 to support the one or more flex-algorithms. Additionally, or alternatively, the route reflector (e.g., a flex-algorithm ORR) may be configured (e.g., in a similar manner) to support the one or more flex-algorithms and/or additional flex-algorithms (e.g., flex-algorithms not supported by PE1).

The one or more flex-algorithms may include, for example, an IGP metric flex-algorithm, a traffic engineering (TE) metric flex-algorithm, a latency metric flex-algorithm, and/or a delay metric flex-algorithm, among other examples. A flex-algorithm, of the one or more flex-algorithms, may be used to determine a route path for a packet. For example, the IGP metric algorithm may be used to determine a route path (e.g., a shortest route path) for a packet based on respective IGP metrics associated with links of the network devices in the network. As another example, the latency metric flex-algorithm may be used to determine a route path (e.g., a shortest route path) for a packet based on respective latency metrics associated with the links of the network devices in the network.

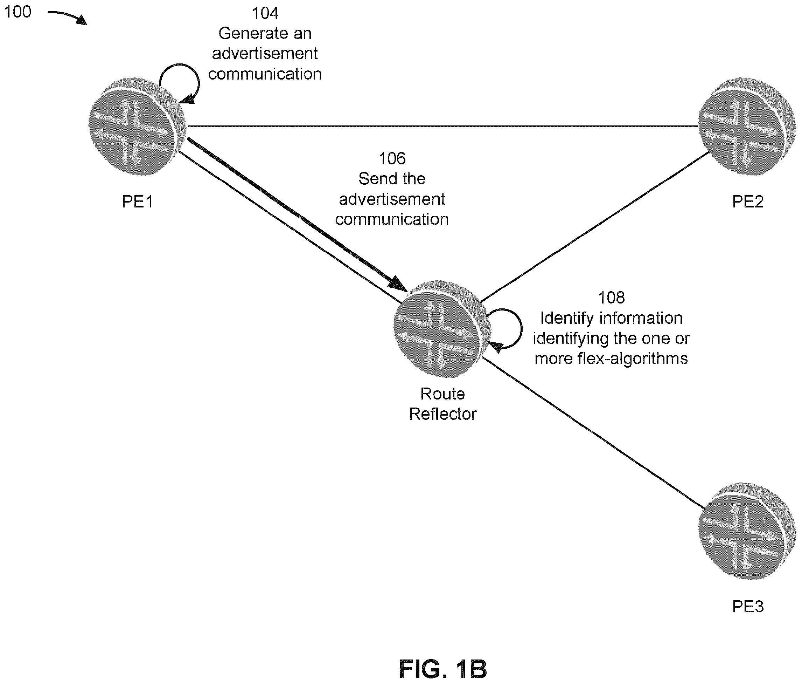

As shown in Fig. 1B, and by reference number 104, PE1 may generate an advertisement communication. The advertisement communication may include information identifying PE1 and/or information identifying the one or more flex-algorithms supported by PE1. In some implementations, the advertisement communication may comprise an intermediate system to intermediate system (ISIS) packet (e.g., an ISIS advertisement packet). The information identifying PE1 and/or the information identifying the one or more flex-algorithms supported by PE1 may be included in a sub-type, length, and value (sub-TLV) of the ISIS packet. In some implementations, the advertisement communication may comprise an open shortest path first (OSPF) packet. The information identifying PE1 and/or the information identifying the one or more flex-algorithms supported by PE1 may be included in a sub-TLV of the OSPF packet. In some implementations, the advertisement communication may comprise a BGP packet (e.g., a BGP advertisement packet). The information identifying PE1 and/or the information identifying the one or more flex-algorithms supported by PE1 may be included in a color sub-TLV (e.g., that includes a color extended community) of the BGP packet.

As further shown in Fig. 1B, and by reference number 106, PE1 may send (e.g., directly or indirectly) the advertisement communication to the route reflector. For example, PE1 may directly transmit the advertisement communication to the route reflector (e.g., via a link between PE1 and the route reflector). As another example, PE1 may indirectly transmit the advertisement communication to the route reflector (e.g., via a link between PE1 and PE2 and via a link between PE2 and the route reflector).

As further shown in Fig. 1B, and by reference number 108, the route reflector may identify, in the advertisement communication, information identifying the one or more flex-algorithms that are supported by PE1. For example, the route reflector may process (e.g., parse) the advertisement communication to identify the one or more flex-algorithms.

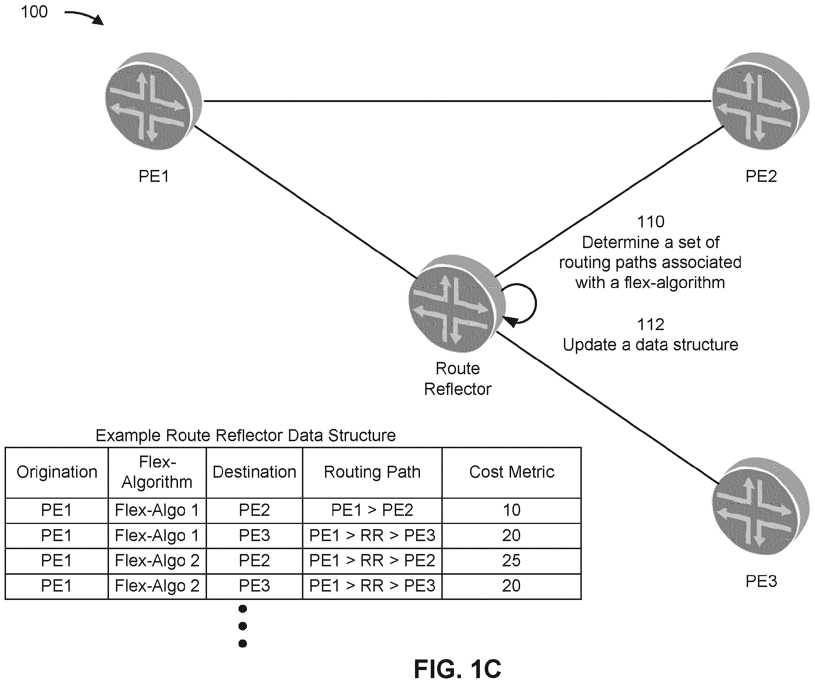

As shown in Fig. 1C, and by reference number 110, the route reflector may determine a set of routing paths associated with at least one flex-algorithm of the one or more flex-algorithms supported by PE1. In some implementations, the route reflector may identify a particular flex-algorithm (e.g., from the information identifying the one or more flex-algorithms included in the advertisement communication) and may use the particular flex-algorithm to determine a set of routing paths associated with the particular flex-algorithm. For example, the route reflector may use the particular flex-algorithm to compute a set of routing paths from PE1 to other network devices in the network, such as PE2 and PE3. A routing path, of the set of routing paths, may indicate one or more hops for routing a packet from an originating network device (e.g., PE1) to another network device in the network (e.g., PE2 or PE3).

In some implementations, to use a flex-algorithm to determine a set of routing paths, the route reflector may identify and/or determine a link topology of the network. The link topology may be stored and/or maintained in a data structure that is included in and/or accessible to the route reflector. The link topology may identify network devices in the network, links between the network devices, and respective metrics associated with the links. For example, the link topology may identify, for a pair of network devices in the network, a first network device of the pair, a second network device of the pair, a link between the first network device and the second network device, and a set of metrics associated with the link. The set of metrics may include, for example, an IGP metric associated with the link, a traffic engineering metric associated with the link, a latency metric associated with the link, and/or a delay metric associated with the link. Accordingly, the route reflector may use the flex-algorithm and relevant metric information associated with the link topology of the network to determine the set of routing paths. For example, when the flex-algorithm is a latency metric flex-algorithm, the route reflector may use latency metric information (e.g., that indicates respective latency metrics associated with links in the network) that is associated with the link topology to determine the set of routing paths. As another example, when the flex-algorithm is a TE metric flex-algorithm, the route reflector may use TE metric information (e.g., that indicates respective TE metrics associated with links in the network) that is associated with the link topology to determine the set of routing paths. In another example, when the flex-algorithm is a delay metric flex-algorithm, the route reflector may use delay metric information (e.g., that indicates respective delay metrics associated with links in the network) that is associated with the link topology to determine the set of routing paths.

As further shown in Fig. 1C, and by reference number 112, the route reflector may update a data structure (e.g., a routing table or a similar data structure that is included in and/or accessible to the route reflector) based on a set of routing paths associated with a flex-algorithm (e.g., that was determined by the route reflector). In some implementations, the route reflector may update the data structure to include routing path information that indicates the set of routing paths. For example, as shown in Fig. 1C, the route reflector may update the data structure to include an entry (e.g., that is associated with a routing path) that indicates an origination network device of the routing path (e.g., PE1), the flex-algorithm (e.g., that the route reflector used to determine the routing path), a destination network device of the routing path (e.g., PE2 or PE3), the routing path (e.g., that includes one or more hops indicated by the routing path), and/or a cost metric value associated with routing path. The cost metric value may be an optimal metric (e.g., a lowest cost metric) associated with the routing path that the route reflector determined when using the flex-algorithm. For example, when the route reflector used a latency metric flex-algorithm, the cost metric value may be an optimal latency metric (e.g., a lowest cost latency metric) associated with the routing path. In an additional example, when the route reflector used a TE metric flex-algorithm, the cost metric value may be an optimal TE metric (e.g., a lowest cost latency metric) associated with the routing path. As another example, when the route reflector used a delay metric flex-algorithm, the cost metric value may be an optimal latency metric (e.g., a lowest cost delay metric) associated with the routing path.

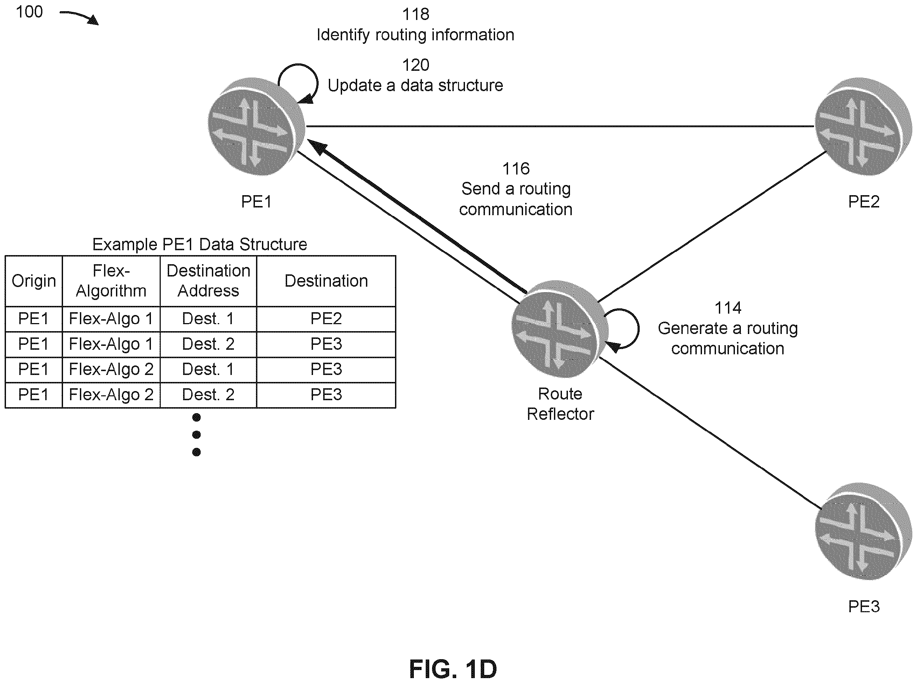

As shown in Fig. 1D, and by reference number 114, the route reflector may generate a routing communication. The routing communication may include routing information that is based on routing path information (e.g., that is associated with a set of routing paths associated with a flex-algorithm, as described above). The routing information may indicate, for a routing path, of the set of routing paths, an origination network device of the routing path (e.g., PE1), the flex-algorithm (e.g., that the route reflector used to determine the routing path), a destination network device of the routing path (e.g., PE2 or PE3), and/or a routing destination address (e.g., a logical address, such as a BGP address, associated with the destination network device). The route reflector may search, based on the destination network device, a data structure (e.g., a same or different data structure as the data structure that includes the routing path information) that maintains logical address information to determine the routing destination address associated with the destination network device. In some implementations, the routing communication may comprise an ISIS packet (e.g., an ISIS routing packet) and the routing information may be included in a sub-TLV of the ISIS packet and/or an OSPF packet and the routing information may be included in a sub-TLV of the OSPF packet. This may be referred to as an ISIS/OSPF link state packet. In some implementations, the routing communication may comprise a BGP packet (e.g., a BGP advertisement packet) and the routing information may be included in a color sub-TLV (e.g., that includes a color extended community) of the BGP packet.

As further shown in Fig. 1D, and by reference number 116, the route reflector may send (e.g., directly or indirectly) the routing communication to PE1. For example, the route reflector may directly transmit the routing communication to PE1 (e.g., via a link between the route reflector and PE1). As another example, the route reflector may indirectly transmit the routing communication to PE1 (e.g., via a link between the route reflector and PE2 and via a link between PE2 and PE1).

As further shown in Fig. 1D, and by reference number 118, PE1 may identify, in the routing communication, the routing information. For example, the route reflector may process (e.g., parse) the routing communication to identify the routing information.

As further shown in Fig. 1D, and by reference number 120, PE1 may update a data structure (e.g., a routing table or a similar data structure that is included in and/or accessible to PE1) based on the routing information. For example, as shown in Fig. 1D, PE1 may update the data structure to include a set of entries associated with a flex-algorithm (e.g., that is supported by PE1). An entry, of the set of entries, may indicate, for example, an origination network device of a routing path (e.g., PE1), the flex-algorithm (e.g., that the route reflector used to determine the routing path), a destination network device of the routing path (e.g., PE2 or PE3), and/or a routing destination address (e.g., a logical address, such as a BGP address, associated with the destination network device). To put it another way, PE1 may update the data structure to include some or all of the routing information that was included in the routing communication.

As shown in Fig. IE, and by reference number 122, PE1 may identify a first flex-algorithm (e.g., Flex-Algo 1 as shown in Fig. IE), of one or more flex-algorithms supported by PE1, that is to be used to facilitate routing of a first packet to a routing destination address (e.g., Dest. 1 as shown in Fig. IE). For example, PE1 may receive a first packet from an endpoint device and may determine (e.g., by parsing header information included in the first packet) that the first packet is to be routed to a routing destination address (e.g., that is associated with another endpoint device) and/or that the first flex-algorithm is to facilitate routing of the first packet to the routing destination address. As further shown in Fig. IE, and by reference number 124, PE1 may determine a destination network device for the first packet. For example, PE1 may search the data structure (e.g., the routing table associated with PE1 that PE1 updated based on the routing communication received from the route reflector) to identify an entry associated with the routing destination address and the first flex-algorithm (e.g., the first entry of the example PE1 data structure shown in Fig. IE). Accordingly, PE1 may identify a destination network device (e.g., PE2, as shown in Fig. IE) that is associated with the routing destination address and the first flex-algorithm. As further shown in Fig. IE, and by reference number 126, PE1 may cause the first packet to be sent to the destination network device (e.g., may cause the first packet to be directly or indirectly transmitted to the destination network device).

As shown in Fig. IF, and by reference number 128, PE1 may identify a second flex-algorithm (e.g., Flex-Algo 2 as shown in Fig. IF), of the one or more flex-algorithms supported by PE1, that is to be used to facilitate routing of a second packet to the routing destination address (e.g., Dest. 1 as shown in Fig. IF). For example, PE1 may receive a second packet from an endpoint device and may determine (e.g., by parsing header information included in the second packet) that the second packet is to be routed to the routing destination address (e.g., the same routing destination address as the first packet) and/or that the first flex-algorithm is to facilitate routing of the second packet to the routing destination address. As further shown in Fig. IF, and by reference number 130, PE1 may determine a destination network device for the second packet. For example, PE1 may search the data structure (e.g., the routing table associated with PE1 that PE1 updated based on the routing communication received from the route reflector) to identify an entry associated with the routing destination address and the second flex-algorithm (e.g., the third entry of the example PE1 data structure shown in Fig. IF). Accordingly, PE1 may identify a destination network device (e.g., PE3, as shown in Fig. IF) that is associated with the routing destination address and the second flex-algorithm. As further shown in Fig. IF, and by reference number 132, PE1 may cause the second packet to be sent to the destination network device (e.g., may cause the second packet to be directly or indirectly transmitted to the destination network device).

In this way, as shown in Figs. IE and IF, PE1 may cause packets to be sent to the same routing destination address by different routing paths respectively associated with different flex-algorithms supported by PE1. This increases a likelihood that a packet is routed in a way in which one or more QoS requirements associated with a network are satisfied, and therefore provides a more reliable performance of the network.

As indicated above, Figs. 1A-1F are provided merely as one or more examples. Other examples may differ from what is described with regard to Figs. 1A-1F.

Fig. 2 is a diagram of an example environment 200 in which systems and/or methods described herein may be implemented. As shown in Fig. 2, environment 200 may include endpoint device 210s, a group of network devices 220 (shown as network device 220-1 through network device 220-N), and a network 230. Devices of environment 200 may interconnect via wired connections, wireless connections, or a combination of wired and wireless connections.

Endpoint device 210 includes one or more devices capable of receiving, generating, storing, processing, and/or providing information, such as information described herein. For example, endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, or a similar type of device. In some implementations, endpoint device 210 may receive network traffic from and/or may provide network traffic to other endpoint devices 210, via network 230 (e.g., by routing packets using network devices 220 as intermediaries).

Network device 220 includes one or more devices capable of receiving, processing, storing, routing, and/or providing traffic (e.g., a packet or other information or metadata) in a manner described herein. For example, network device 220 may include a router, such as a label switching router (LSR), a label edge router (LER), an ingress router, an egress router, a provider router (e.g., a provider edge router or a provider core router), a virtual router, or another type of router. Additionally, or alternatively, network device 220 may include a gateway, a switch, a firewall, a hub, a bridge, a reverse proxy, a server (e.g., a proxy server, a cloud server, or a data center server), a load balancer, and/or a similar device. In some implementations, network device may be a route reflector (e.g., a flex-algorithm optimal route reflector (ORR)), provider edge (PE) network device, or a consumer edge (CE) network device, among other examples. In some implementations, network device 220 may be a physical device implemented within a housing, such as a chassis. In some implementations, network device 220 may be a virtual device implemented by one or more computer devices of a cloud computing environment or a data center. In some implementations, a group of network devices 220 may be a group of data center nodes that are used to route traffic flow through network 230.

Network 230 includes one or more wired and/or wireless networks. For example, network 230 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

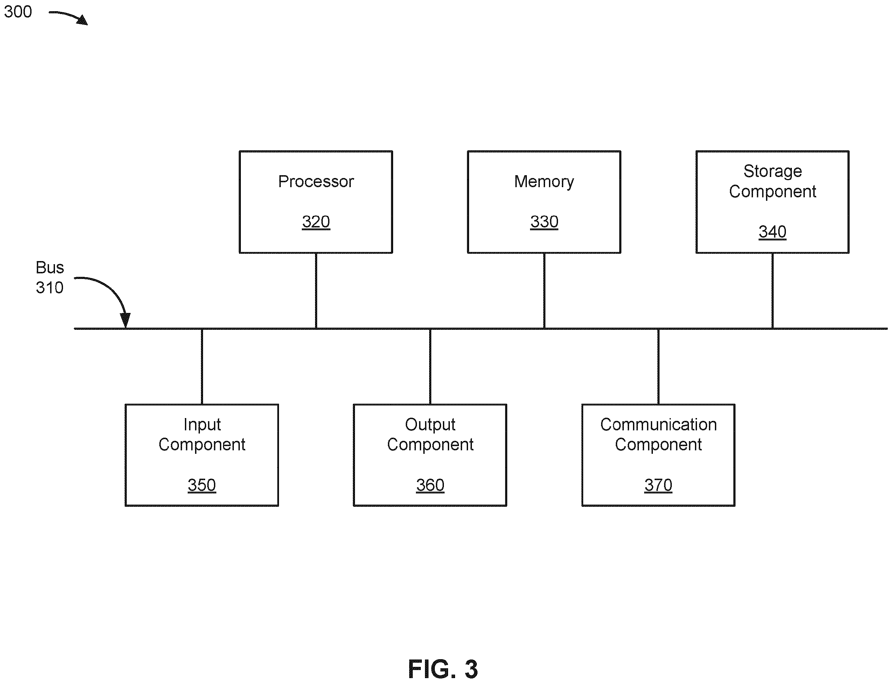

Fig. 3 is a diagram of example components of a device 300, which may correspond to endpoint device 210 and/or network device 220. In some implementations, endpoint device 210 and/or network device 220 may include one or more devices 300 and/or one or more components of device 300. As shown in Fig. 3, device 300 may include a bus 310, a processor 320, a memory 330, a storage component 340, an input component 350, an output component 360, and a communication component 370.

Bus 310 includes a component that enables wired and/or wireless communication among the components of device 300. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform a function. Memory 330 includes a random access memory, a read only memory, and/or another type of memory (e.g., a flash memory, a magnetic memory, and/or an optical memory).

Storage component 340 stores information and/or software related to the operation of device 300. For example, storage component 340 may include a hard disk drive, a magnetic disk drive, an optical disk drive, a solid state disk drive, a compact disc, a digital versatile disc, and/or another type of computer-readable medium. Input component 350 enables device 300 to receive input, such as user input and/or sensed inputs. For example, input component 350 may include a touch screen, a keyboard, a keypad, a mouse, a button, a microphone, a switch, a sensor, a global positioning system component, an accelerometer, a gyroscope, and/or an actuator. Output component 360 enables device 300 to provide output, such as via a display, a speaker, and/or one or more light-emitting diodes. Communication component 370 enables device 300 to communicate with other devices, such as via a wired connection and/or a wireless connection. For example, communication component 370 may include a receiver, a transmitter, a transceiver, a modem, a network interface card, and/or an antenna.

Device 300 may perform one or more processes described herein. For example, a computer-readable medium (e.g., memory 330 and/or storage component 340) may store a set of instructions (e.g., one or more instructions, code, software code, and/or program code) for execution by processor 320. Processor 320 may execute the set of instructions to perform one or more processes described herein. In some implementations, execution of the set of instructions, by one or more processors 320, causes the one or more processors 320 and/or the device 300 to perform one or more processes described herein. In some implementations, hardwired circuitry may be used instead of or in combination with the instructions to perform one or more processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

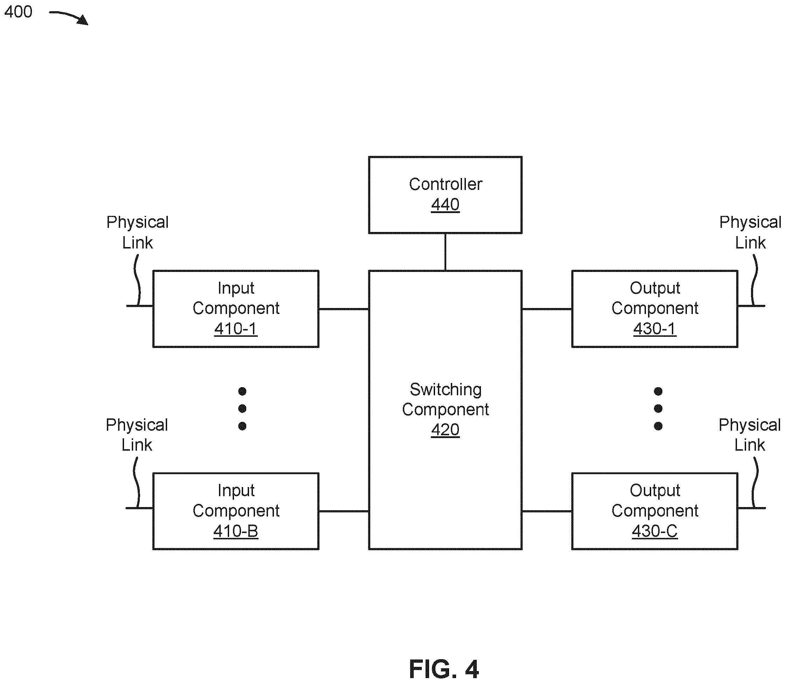

Fig. 4 is a diagram of example components of a device 400. Device 400 may correspond to endpoint device 210 and/or network device 220. In some implementations, endpoint device 210 and/or network device 220 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions stored by a computer-readable medium. A computer-readable medium may include a memory device. A memory device includes memory space within a single physical storage device or memory space spread across multiple physical storage devices. Additionally or alternatively, a computer-readable medium may include transient media such as carrier signals and transmission media.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

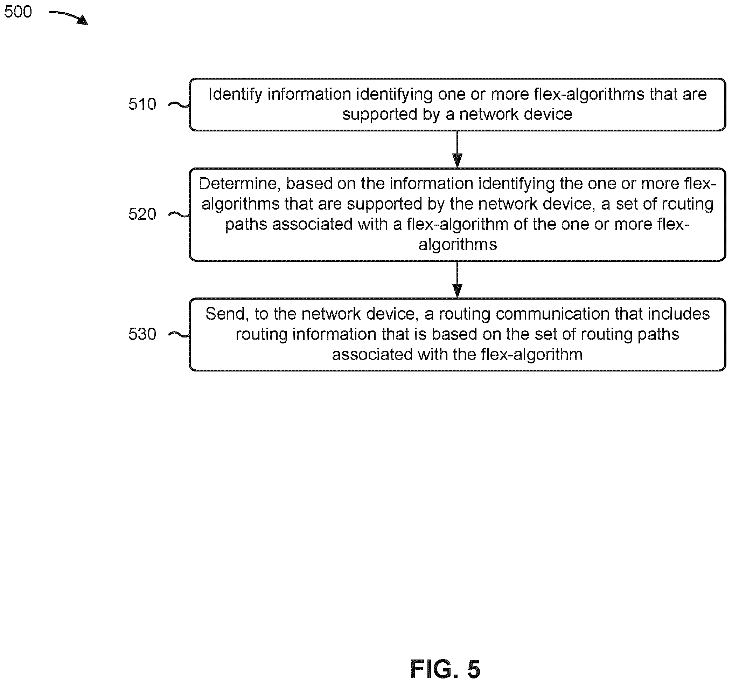

Fig. 5 is a flowchart of an example process 500 related to utilizing flex-algorithms with route reflection. In some implementations, one or more process blocks of Fig. 5 may be performed by a route reflector (e.g., a flex-algorithm optimal route reflector (ORR) and/or a route reflector network device 220). In some implementations, one or more process blocks of Fig. 5 may be performed by another device or a group of devices separate from or including the route reflector, such as another network device (e.g., another network device 220). Additionally, or alternatively, one or more process blocks of Fig. 5 may be performed by one or more components of device 300, such as processor 320, memory 330, storage component 340, input component 350, output component 360, and/or communication component 370; one or more components of device 400; device 400, such as input component 410, switching component 420, output component 430, and/or controller 440; and/or one or more components of another device.

As shown in Fig. 5, process 500 may include identifying information identifying one or more flex-algorithms that are supported by a network device (block 510). For example, the route reflector may identify information identifying one or more flex-algorithms that are supported by a network device, as described above. In some implementations, the route reflector may receive an advertisement communication from the network device and may identify, in the advertisement communication, information identifying the one or more flex-algorithms that are supported by the network device.

As further shown in Fig. 5, process 500 may include determining, based on the information identifying the one or more flex-algorithms that are supported by the network device, a set of routing paths associated with a flex-algorithm of the one or more flex-algorithms (block 520). For example, the route reflector may determine, based on the information identifying the one or more flex-algorithms that are supported by the network device, a set of routing paths associated with a flex-algorithm of the one or more flex-algorithms, as described above.

As further shown in Fig. 5, process 500 may include sending, to the network device, a routing communication that includes routing information that is based on the set of routing paths associated with the flex-algorithm (block 530). For example, the route reflector may send, to the network device, a routing communication that includes routing information that is based on the set of routing paths associated with the flex-algorithm, as described above.

Process 500 may include additional implementations, such as any single implementation or any combination of implementations described below and/or in connection with one or more other processes described elsewhere herein.

In a first implementation, determining the set of routing paths associated with the flex-algorithm includes determining a link topology of the network, wherein the link topology indicates, for a link between network devices of the network, a set of metrics associated with the link; identifying, based on the information identifying the one or more flex-algorithms that are supported by the network device, the flex-algorithm of the one or more flex-algorithms; and determining, using the flex-algorithm and based on the link topology of the network, the set of routing paths.

In a second implementation, alone or in combination with the first implementation, the set of metrics associated with the link comprises at least one of an IGP metric associated with the link, a traffic engineering metric associated with the link, a latency metric associated with the link, or a delay metric associated with the link.

In a third implementation, alone or in combination with one or more of the first and second implementations, a routing path, of the set of routing paths associated with the flex-algorithm, indicates one or more hops for routing a packet from the network device to another network device in the network.

In a fourth implementation, alone or in combination with one or more of the first through third implementations, the routing information indicates, for a routing path, of the set of routing paths associated with the flex-algorithm, at least one of: the network device, the flex-algorithm, a routing destination address, or a destination network device in the network

In a fifth implementation, alone or in combination with one or more of the first through fourth implementations, the destination network device is associated with the routing destination address.

In a sixth implementation, alone or in combination with one or more of the first through fifth implementations, process 500 includes updating a data structure to include routing path information that indicates the set of routing paths associated with the flex-algorithm.

In a seventh implementation, alone or in combination with one or more of the first through sixth implementations, updating the data structure includes causing the data structure to include an entry that indicates at least one of: the network device, the flex-algorithm, another network device of the network, a particular routing path, of a set of routing paths associated with the flex-algorithm, from the network device to the other network device, or a cost metric value associated with the particular routing path.

In an eighth implementation, alone or in combination with one or more of the first through seventh implementations, transmitting the routing communication to the network device causes the network device to transmit a packet to another network device based on a routing path, of the set of routing paths, associated with the flex-algorithm.

In a ninth implementation, alone or in combination with one or more of the first through eighth implementations, the flex-algorithm is a latency metric flex-algorithm, and the one or more instructions, that cause the route reflector to determine the set of routing paths associated with the flex-algorithm, cause the route reflector to determine a link topology of the network, wherein the link topology indicates, for a link between network devices of the network, a latency metric associated with the link, and determine, using the flex-algorithm and based on the link topology of the network, the set of routing paths associated with the flex-algorithm.

In a tenth implementation, alone or in combination with one or more of the first through ninth implementations, the flex-algorithm is a TE metric flex-algorithm, and the one or more instructions, that cause the route reflector to determine the set of routing paths associated with the flex-algorithm, cause the route reflector to determine a link topology of the network, wherein the link topology indicates, for a link between network devices of the network, a TE metric associated with the link, and determine, using the flex-algorithm and based on the link topology of the network, the set of routing paths associated with the flex-algorithm.

In an eleventh implementation, alone or in combination with one or more of the first through ten implementations, the flex-algorithm is a delay metric flex-algorithm, and the one or more instructions, that cause the route reflector to determine the set of routing paths associated with the flex-algorithm, cause the route reflector to determine a link topology of the network, wherein the link topology indicates, for a link between network devices of the network, a delay metric associated with the link, and determine, using the flex-algorithm and based on the link topology of the network, the set of routing paths associated with the flex-algorithm.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

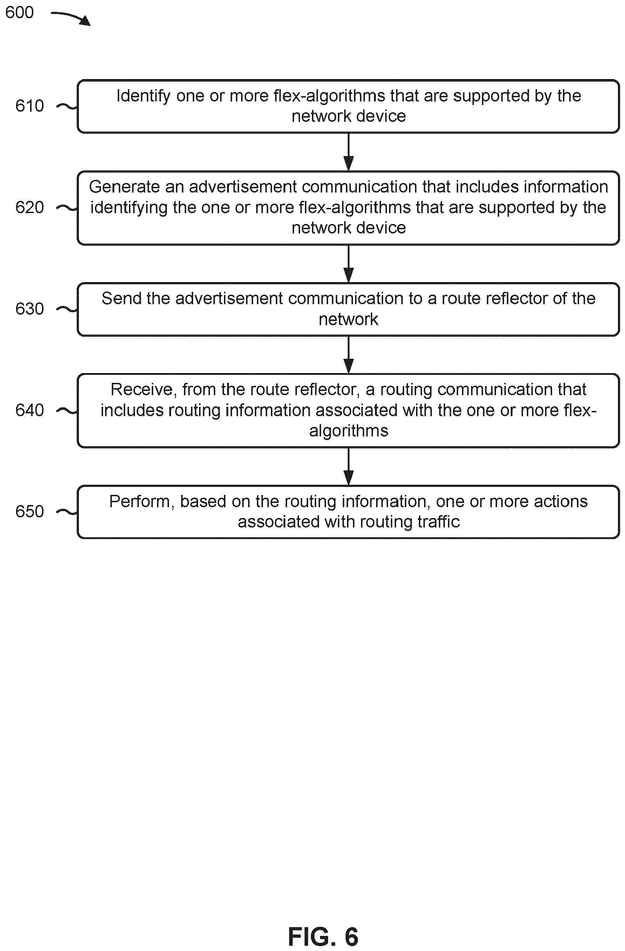

Fig. 6 is a flowchart of an example process 600 related to utilizing flex-algorithms with route reflection. In some implementations, one or more process blocks of Fig. 6 may be performed by a network device (e.g., a PE network device 220). In some implementations, one or more process blocks of Fig. 6 may be performed by one or more components of device 300, such as processor 320, memory 330, storage component 340, input component 350, output component 360, and/or communication component 370; one or more components of device 400; device 400, such as input component 410, switching component 420, output component 430, and/or controller 440; and/or one or more components of another device.

As shown in Fig. 6, process 600 may include identifying one or more flex-algorithms that are supported by the network device (block 610). For example, the network device may identify one or more flex-algorithms that are supported by the network device, as described above.

As further shown in Fig. 6, process 600 may include generating an advertisement communication that includes information identifying the one or more flex-algorithms that are supported by the network device (block 620). For example, the network device may generate an advertisement communication that includes information identifying the one or more flex-algorithms that are supported by the network device, as described above.

As further shown in Fig. 6, process 600 may include sending the advertisement communication to a route reflector of the network (block 630). For example, the network device may send the advertisement communication to a route reflector (e.g., a flex-algorithm optimal route reflector (ORR)) of the network, as described above.

As further shown in Fig. 6, process 600 may include receiving, from the route reflector, a routing communication that includes routing information associated with the one or more flex-algorithms (block 640). For example, the network device may receive, from the route reflector, a routing communication that includes routing information associated with the one or more flex-algorithms, as described above.

As further shown in Fig. 6, process 600 may include performing, based on the routing information, one or more actions associated with routing traffic (block 650). For example, the network device may perform, based on the routing information, one or more actions associated with routing traffic, as described above.

Process 600 may include additional implementations, such as any single implementation or any combination of implementations described below and/or in connection with one or more other processes described elsewhere herein.

In a first implementation, performing the one or more actions comprises updating, based on the routing information, a data structure to include a set of entries associated with a particular flex-algorithm, of the one or more flex-algorithms, wherein an entry, of the set of entries, indicates at least one of: the network device, the particular flex-algorithm, a routing destination address, or a destination network device in the network.

In a second implementation, alone or in combination with the first implementation, performing the one or more actions comprises identifying a particular flex-algorithm, of the one or more flex-algorithms, that is associated with routing a packet to a routing destination address; determining, based on the routing information and the particular flex-algorithm, a destination network device; and causing the packet to be transmitted to the destination network device.

In a third implementation, alone or in combination with one or more of the first and second implementations, the destination network device is associated with the routing destination address.

In a fourth implementation, alone or in combination with one or more of the first through third implementations, performing the one or more actions comprises identifying a first flex-algorithm, of the one or more flex-algorithms, that is associated with routing a first packet to a routing destination address; identifying, based on the routing information and the first flex-algorithm, a first destination network device associated with the routing destination address; causing the first packet to be transmitted to the first destination network device; identifying a second flex-algorithm, of the one or more flex-algorithms, that is associated with routing a second packet to the routing destination address; identifying, based on the routing information and the second flex-algorithm, a second destination network device associated with the routing destination address; and causing the second packet to be transmitted to the second network device.

In a fifth implementation, alone or in combination with one or more of the first through fourth implementations, the one or more flex-algorithms include at least one of: an IGP metric flex-algorithm, a TE metric flex-algorithm, a latency metric flex-algorithm, or a delay metric flex-algorithm.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel.

Thus, from one perspective, there has now been described a route reflector (e.g., a flex-algorithm optimal route reflector (ORR)) which may receive an advertisement communication from a network device of a network associated with the route reflector and may identify, in the advertisement communication, information identifying one or more flex-algorithms that are supported by the network device. The route reflector may determine, based on the information identifying the one or more flex-algorithms that are supported by the network device, a set of routing paths associated with a flex-algorithm of the one or more flex-algorithms. The route reflector may update a data structure to include routing path information that indicates the set of routing paths associated with the flex-algorithm and may transmit a routing communication that includes routing information associated with the routing path information to the network device.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

Further examples of feature combinations taught by the present disclosure are set out in the following numbered clauses:
1. A route reflector, comprising:
   one or more memories; and
   one or more processors to:
      receive an advertisement communication from a network device of a network associated with the route reflector;
      identify, in the advertisement communication, information identifying one or more flex-algorithms that are supported by the network device;
      determine, based on the information identifying the one or more flex-algorithms that are supported by the network device, a set of routing paths associated with a flex-algorithm of the one or more flex-algorithms;
      update a data structure to include routing path information that indicates the set of routing paths associated with the flex-algorithm; and
      transmit a routing communication that includes routing information associated with the routing path information to the network device.
2. The route reflector of clause 1, wherein the one or more processors, when determining the set of routing paths associated with the flex-algorithm, are to:
   determine a link topology of the network,
      wherein the link topology indicates, for a link between network devices of the network, a set of metrics associated with the link;
   identify, based on the information identifying the one or more flex-algorithms that are supported by the network device, the flex-algorithm of the one or more flex-algorithms; and
   determine, using the flex-algorithm and based on the link topology of the network, the set of routing paths.
3. The route reflector of clause 2, wherein the set of metrics associated with the link comprises at least one of:
   an interior gateway protocol (IGP) metric associated with the link;
   a traffic engineering metric associated with the link;
   a latency metric associated with the link; or
   a delay metric associated with the link.
4. The route reflector of any preceding clause, wherein the one or more processors, when updating the data structure, are to:
   cause the data structure to include an entry that indicates at least one of:
   the network device;
   the flex-algorithm;
   another network device of the network;
   a particular routing path, of a set of routing paths associated with the flex-algorithm, from the network device to the other network device; or
   a cost metric value associated with the particular routing path.
5. The route reflector of any preceding clause, wherein a routing path, of the set of routing paths associated with the flex-algorithm, indicates one or more hops for routing a packet from the network device to another network device in the network.
6. The route reflector of any preceding clause, wherein the routing information indicates, for a routing path, of the set of routing paths associated with the flex-algorithm, at least one of:
   the network device;
   the flex-algorithm;
   a routing destination address; or
   a destination network device in the network.
7. The route reflector of clause 6, wherein the destination network device is associated with the routing destination address.
8. A computer-readable medium comprising a set of instructions, the set of instructions comprising:
   one or more instructions that, when executed by one or more processors of a route reflector, cause the route reflector to:
   identify information identifying one or more flex-algorithms that are supported by a network device,
   determine, based on the information identifying the one or more flex-algorithms that are supported by the network device, a set of routing paths associated with a flex-algorithm of the one or more flex-algorithms; and
   send, to the network device, a routing communication that includes routing information that is based on the set of routing paths associated with the flex-algorithm.
9. The computer-readable medium of clause 8, wherein the one or more instructions, when executed by the one or more processors, further cause the route reflector to:
   update a data structure to include routing path information that indicates the set of routing paths associated with the flex-algorithm.
10. The computer-readable medium of clause 8 or clause 9, wherein transmitting the routing communication to the network device causes the network device to transmit a packet to another network device based on a routing path, of the set of routing paths, associated with the flex-algorithm.
11. The computer-readable medium of any of clauses 8 to 10, wherein the flex-algorithm is a latency metric flex-algorithm,
   wherein the one or more instructions, that cause the route reflector to determine the set of routing paths associated with the flex-algorithm, cause the route reflector to:
   determine a link topology of the network,
      wherein the link topology indicates, for a link between network devices of the network, a latency metric associated with the link; and
   determine, using the flex-algorithm and based on the link topology of the network, the set of routing paths associated with the flex-algorithm.
12. The computer-readable medium of any of clauses 8 to 11, wherein the flex-algorithm is a traffic engineering (TE) metric flex-algorithm,
   wherein the one or more instructions, that cause the route reflector to determine the set of routing paths associated with the flex-algorithm, cause the route reflector to:
   determine a link topology of the network,
      wherein the link topology indicates, for a link between network devices of the network, a TE metric associated with the link; and
   determine, using the flex-algorithm and based on the link topology of the network, the set of routing paths associated with the flex-algorithm.
13. The computer-readable medium of any of clauses 8 to 12, wherein the flex-algorithm is a delay metric flex-algorithm,
   wherein the one or more instructions, that cause the route reflector to determine the set of routing paths associated with the flex-algorithm, cause the route reflector to:
   determine a link topology of the network,
   wherein the link topology indicates, for a link between network devices of the network, a delay metric associated with the link; and
   determine, using the flex-algorithm and based on the link topology of the network, the set of routing paths associated with the flex-algorithm.
14. The computer-readable medium of any of clauses 8 to 13, wherein a routing path, of the set of routing paths associated with the flex-algorithm, indicates one or more hops for routing a packet from the network device to another network device in the network.
15. A method, comprising:
   identifying, by a network device of a network, one or more flex-algorithms that are supported by the network device;
   generating, by the network device, an advertisement communication that includes information identifying the one or more flex-algorithms that are supported by the network device;
   sending, by the network device, the advertisement communication to a route reflector of the network;
   receiving, by the network device and from the route reflector, a routing communication that includes routing information associated with the one or more flex-algorithms; and
   performing, by the network device and based on the routing information, one or more actions associated with routing traffic.
16. The method of clause 15, wherein performing the one or more actions comprises:
   updating, based on the routing information, a data structure to include a set of entries associated with a particular flex-algorithm, of the one or more flex-algorithms,
   wherein an entry, of the set of entries, indicates at least one of:
   the network device;
   the particular flex-algorithm;
   a routing destination address; or
   a destination network device in the network.
17. The method of clause 15 or clause 16, wherein performing the one or more actions comprises:
   identifying a particular flex-algorithm, of the one or more flex-algorithms, that is associated with routing a packet to a routing destination address;
   determining, based on the routing information and the particular flex-algorithm, a destination network device; and
   causing the packet to be transmitted to the destination network device.
18. The method of clause 17, wherein the destination network device is associated with the routing destination address.
19. The method of any of clauses 15 to 18, wherein performing the one or more actions comprises:
   identifying a first flex-algorithm, of the one or more flex-algorithms, that is associated with routing a first packet to a routing destination address;
   identifying, based on the routing information and the first flex-algorithm, a first destination network device associated with the routing destination address;
   causing the first packet to be transmitted to the first destination network device;
   identifying a second flex-algorithm, of the one or more flex-algorithms, that is associated with routing a second packet to the routing destination address;
   identifying, based on the routing information and the second flex-algorithm, a second destination network device associated with the routing destination address; and
   causing the second packet to be transmitted to the second network device.
20. The method of any of clauses 15 to 19, wherein the one or more flex-algorithms include at least one of:
   an interior gateway protocol (IGP) metric flex-algorithm;
   a traffic engineering (TE) metric flex-algorithm;
   a latency metric flex-algorithm; or
   a delay metric flex-algorithm.

## Claims

1. A route reflector, comprising:
one or more memories; and
one or more processors to:
receive an advertisement communication from a network device of a network associated with the route reflector;
identify, in the advertisement communication, information identifying one or more flex-algorithms that are supported by the network device;
determine, based on the information identifying the one or more flex-algorithms that are supported by the network device, a set of routing paths associated with a flex-algorithm of the one or more flex-algorithms;
update a data structure to include routing path information that indicates the set of routing paths associated with the flex-algorithm; and
transmit a routing communication that includes routing information associated with the routing path information to the network device.

2. The route reflector of claim 1, wherein the one or more processors, when determining the set of routing paths associated with the flex-algorithm, are to:
determine a link topology of the network,
wherein the link topology indicates, for a link between network devices of the network, a set of metrics associated with the link;
identify, based on the information identifying the one or more flex-algorithms that are supported by the network device, the flex-algorithm of the one or more flex-algorithms; and
determine, using the flex-algorithm and based on the link topology of the network, the set of routing paths,
optionally wherein the set of metrics associated with the link comprises at least one of:
an interior gateway protocol (IGP) metric associated with the link;
a traffic engineering metric associated with the link;
a latency metric associated with the link; or
a delay metric associated with the link.

3. The route reflector of claim 1 or claim 2, wherein the one or more processors, when updating the data structure, are to:
cause the data structure to include an entry that indicates at least one of:
the network device;
the flex-algorithm;
another network device of the network;
a particular routing path, of a set of routing paths associated with the flex-algorithm, from the network device to the other network device; or
a cost metric value associated with the particular routing path.

4. The route reflector of any preceding claim, wherein a routing path, of the set of routing paths associated with the flex-algorithm, indicates one or more hops for routing a packet from the network device to another network device in the network.

5. The route reflector of any preceding claim, wherein the routing information indicates, for a routing path, of the set of routing paths associated with the flex-algorithm, at least one of:
the network device;
the flex-algorithm;
a routing destination address; or
a destination network device in the network optionally wherein the destination network device is associated with the routing destination address.

6. A computer-readable medium comprising a set of instructions, the set of instructions comprising:
one or more instructions that, when executed by one or more processors of a route reflector, cause the route reflector to:
identify information identifying one or more flex-algorithms that are supported by a network device,
determine, based on the information identifying the one or more flex-algorithms that are supported by the network device, a set of routing paths associated with a flex-algorithm of the one or more flex-algorithms; and
send, to the network device, a routing communication that includes routing information that is based on the set of routing paths associated with the flex-algorithm,
optionally wherein the one or more instructions, when executed by the one or more processors, further cause the route reflector to:
update a data structure to include routing path information that indicates the set of routing paths associated with the flex-algorithm.

7. The computer-readable medium of claim 6, wherein transmitting the routing communication to the network device causes the network device to transmit a packet to another network device based on a routing path, of the set of routing paths, associated with the flex-algorithm.

8. The computer-readable medium of claim 6 or claim 7, wherein the flex-algorithm is a latency metric flex-algorithm,
wherein the one or more instructions, that cause the route reflector to determine the set of routing paths associated with the flex-algorithm, cause the route reflector to:
determine a link topology of the network,
wherein the link topology indicates, for a link between network devices of the network, a latency metric associated with the link; and
determine, using the flex-algorithm and based on the link topology of the network, the set of routing paths associated with the flex-algorithm,
and/or
wherein the flex-algorithm is a traffic engineering (TE) metric flex-algorithm,
wherein the one or more instructions, that cause the route reflector to determine the set of routing paths associated with the flex-algorithm, cause the route reflector to:
determine a link topology of the network,
wherein the link topology indicates, for a link between network devices of the network, a TE metric associated with the link; and
determine, using the flex-algorithm and based on the link topology of the network, the set of routing paths associated with the flex-algorithm.

9. The computer-readable medium of any of claims 6 to 8, wherein the flex-algorithm is a delay metric flex-algorithm,
wherein the one or more instructions, that cause the route reflector to determine the set of routing paths associated with the flex-algorithm, cause the route reflector to:
determine a link topology of the network,
wherein the link topology indicates, for a link between network devices of the network, a delay metric associated with the link; and
determine, using the flex-algorithm and based on the link topology of the network, the set of routing paths associated with the flex-algorithm.

10. The computer-readable medium of any of claims 6 to 9, wherein a routing path, of the set of routing paths associated with the flex-algorithm, indicates one or more hops for routing a packet from the network device to another network device in the network.

11. A method, comprising:
identifying, by a network device of a network, one or more flex-algorithms that are supported by the network device;
generating, by the network device, an advertisement communication that includes information identifying the one or more flex-algorithms that are supported by the network device;
sending, by the network device, the advertisement communication to a route reflector of the network;
receiving, by the network device and from the route reflector, a routing communication that includes routing information associated with the one or more flex-algorithms; and
performing, by the network device and based on the routing information, one or more actions associated with routing traffic.

12. The method of claim 11, wherein performing the one or more actions comprises:
updating, based on the routing information, a data structure to include a set of entries associated with a particular flex-algorithm, of the one or more flex-algorithms,
wherein an entry, of the set of entries, indicates at least one of:
the network device;
the particular flex-algorithm;
a routing destination address; or
a destination network device in the network.

13. The method of claim 11 or claim 12, wherein performing the one or more actions comprises:
identifying a particular flex-algorithm, of the one or more flex-algorithms, that is associated with routing a packet to a routing destination address;
determining, based on the routing information and the particular flex-algorithm, a destination network device; and
causing the packet to be transmitted to the destination network device,
optionally wherein the destination network device is associated with the routing destination address.

14. The method of any of claims 11 to 13, wherein performing the one or more actions comprises:
identifying a first flex-algorithm, of the one or more flex-algorithms, that is associated with routing a first packet to a routing destination address;
identifying, based on the routing information and the first flex-algorithm, a first destination network device associated with the routing destination address;
causing the first packet to be transmitted to the first destination network device;
identifying a second flex-algorithm, of the one or more flex-algorithms, that is associated with routing a second packet to the routing destination address;
identifying, based on the routing information and the second flex-algorithm, a second destination network device associated with the routing destination address; and
causing the second packet to be transmitted to the second network device.

15. The method of any of claims 11 to 14, wherein the one or more flex-algorithms include at least one of:
an interior gateway protocol (IGP) metric flex-algorithm;
a traffic engineering (TE) metric flex-algorithm;
a latency metric flex-algorithm; or
a delay metric flex-algorithm.
